Europäisches Patentamt

European Patent Office

Office européen des brevets

(11) Veröffentlichungsnummer: **0 401 733 A2**

## (12) EUROPÄISCHE PATENTANMELDUNG

(21) Anmeldenummer: 90110580.9

(51) Int. Cl.⁵: **H01G 1/02**

(22) Anmeldetag: 05.06.90

(30) Priorität: **08.06.89 DE 8907039 U**

(43) Veröffentlichungstag der Anmeldung:
**12.12.90 Patentblatt 90/50**

(84) Benannte Vertragsstaaten:
**DE ES FR GB IT**

(71) Anmelder: **Standard Elektrik Lorenz
Aktiengesellschaft
Lorenzstrasse 10
D-7000 Stuttgart 40(DE)**

(72) Erfinder: **Nachtigall, Eduard
Kindermannstrasse 7
D-8500 Nürnberg(DE)**

(74) Vertreter: **Hösch, Günther, Dipl.-Ing. et al
Standard Elektrik Lorenz AG Patent- und
Lizenzwesen Postfach 30 09 29
D-7000 Stuttgart 30(DE)**

(54) **Elektrischer Kondensator.**

(57) Bei einem in ein Gehäuse (2) eingebauten Kondensatorkörper (1) mit an der Stirnseite des Gehäuses (2) vorgesehener Isolierstoffplatte (5) mit nach außen ragenden Anschlußelementen (12, 13) ist auf der Isolierstoffplatte (5) ein Isolierstoffteil (10) befestigt, das zwischen den Anschlußelementen (12, 13) einen Steg (15) aufweist. Zur Erhöhung der Spannungsfestigkeit zum Rand (7) des Gehäuses (2) hin ist das Isolierstoffteil (10) mit einem umlaufenden Kragen oder Kragenabschnitten (16) versehen, die zwischen den Anschlußelementen (12, 13) und dem Rand (7) angeordnet sind. Auf den Kragen oder die Kragenabschnitte (16) kann eine Isolierstoffkappe (17) aufgerastet werden.

FIG.3

EP 0 401 733 A2

Die vorliegende Erfindung bezieht sich auf einen elektrischen Kondensator gemäß dem Oberbegriff des A 1.

Ein Verschlußdeckel der verwendeten Art für elektrische Kondensatoren ist aus dem DE-GM 81 31 169 bekannt. Der oder die Stege zwischen den Anschlußelementen ermöglicht bzw. ermöglichen hohe Spannungen zwischen den Anschlußelementen.

Aufgabe der Erfindung ist es, bei Kondensatoren mit einem Verschlußdeckel der bekannten Art die Kriechstrecken zwischen den Anschlußelementen und anderen spannungsführenden oder auf Masse liegenden Teilen, z. B. dem Metallbecher des Kondensators, zu erhöhen und damit auch dort eine bessere Spannungsfestigkeit zu erreichen.

Gelöst wird diese Aufgabe durch die im Kennzeichen des Anspuchs 1 angegebenen Merkmale. Dadurch kann auch bei geringem Abstand zwischen den Anschlußelementen und weiterer spannungsführenden Teile ein Überschlag oder unzulässig hoher Kriechstrom bei den zugelassenen Betriebs- und/oder Überspannungen vermieden werden. Von besonderem Vorteil ist, daß ein erfindungsgemäßes Isolierstoffteil für unterschiedlich große Isolierstoffplatten geeignet ist und damit ein großer Typenbereich von Kondensatoren mit dem gleichen Bauteil gefertigt werden kann.

Weitere vorteilhafte Einzelheiten der Erfindung sind in den Unteransprüchen angegeben und nachfolgend anhand der in der Zeichnung veranschaulichten Ausführungsbeispiele beschrieben. Es zeigen:

Fig. 1 einen Teil eines Kondensators von der Seite im Schnitt,

Fig. 2 eine Draufsicht auf die Isolierstoffplatte des Kondensators gemäß Fig. 1,

Fig. 3 einen Teil eines Kondensators mit einer Isolierstoffkappe von der Seite im Schnitt und

Fig. 4 eine Draufsicht auf die Isolierstoffplatte des Kondensators gemäß Fig. 3 bei abgenommener Isolierstoffkappe.

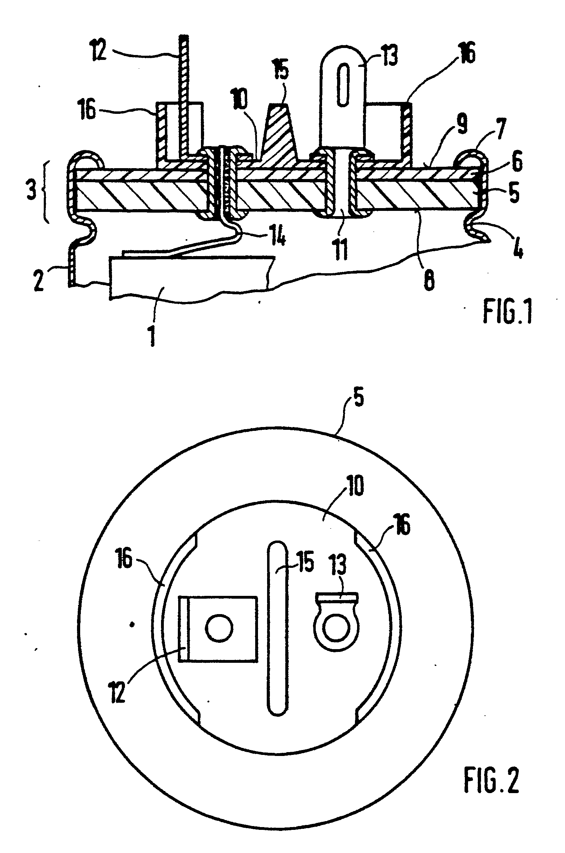

In Fig. 1 ist ein Kondensatorkörper, z. B. ein Kondensatorwickel, bezeichnet, von dem nur ein Teil dargestellt ist. Der Kondensatorkörper 1 ist in einem Gehäuse 2 vorgesehen, das z. B. als Rohr oder insbesondere als Becher ausgebildet ist. Es kann aus Kunststoff oder Metall, insbesondere Aluminium, bestehen.

Im Randbereich 3 ist das Gehäuse 2 mit einer als Ringsicke ausgebildeten Auflage 4 versehen. Auf diese ist eine Isolierstoffplatte 5 aufgelegt, die oben und/oder unten mit einer elastischen Dichtungsschicht 6 beschichtet ist. Die Isolierstoffplatte 5 besteht z. B. aus Hartpapier oder einem Thermoplast oder einem Duroplast und die Dichtungsschicht 6 aus Gummi oder einem gummielastischen Kunststoff.

Der Rand 7 des Gehäuses 2 ist nach innen umgebördelt und dadurch die Isolierstoffplatte 5 befestigt und gleichzeitig das Gehäuse 2 am Rand 7 abgedichtet. Wenn die Dichtungsschicht 6 auf der Innenseite 8 der Isolierstoffplatte 5 vorgesehen ist oder zusätzlich vorgesehen ist, erfolgt eine Abdichtung oder zusätzliche Abdichtung in Verbindung mit der Auflage 4. Anstelle der Befestigung durch Umbördeln des Randes 7 kann diese auch durch Einkerben des Randes 7 oder durch einen Schnapp-oder Rastverschluß erfolgen.

Auf der Außenseite 9 der Isolierstoffplatte 5 bzw. der Dichtungsschicht 6 ist ein Isolierstoffteil 10, vorzugsweise in Form einer Scheibe, mittels durch die Isolierstoffplatte 5 hindurchragender Nieten 11 befestigt. Vorteilhaft dienen die Nieten 11 zugleich zur Befestigung von Anschlußelementen 12 bzw. 13. Dabei sind die Nieten 11 als Hohlnieten ausgebildet, in die ein Anschlußdraht 14 des Kondensatorkörpers 1 hineingesteckt und darin fest und dicht verlötet ist.

Zwischen den gezeigten beiden Anschlußelementen 12 und 13 ist ein Steg 15 vorgesehen, der eine Verlängerung des Kriechweges und damit eine hohe Spannungsfestigkeit zwischen den Anschlußelementen 12 und 13 bewirkt. Sind mehr als zwei Anschlußelemente vorgesehen, so ist jeweils zwischen zwei benachbarten ein Steg vorhanden.

Zur weiteren Erhöhung der Spannungsfestigkeit zwischen den Anschlußelementen und anderen spannungsführenden oder auf Masse liegenden Teilen oder z. B. dem aus Metall bestehenden Gehäuse 2, ist zwischen Anschlußelement 12 und 13 und dem Rand 7 je ein Kragenabschnitt 16 vorgesehen. Anstelle von mehreren Kragenabschnitten 16 kann auch ein umlaufender Kragen angeordnet sein. Isolierstoffteil 10, Steg 15 und Kragen oder Kragenabschnitte 16 bestehen aus einem homogenen Formteil, z. B. aus Spritzgußoder Preßmasse.

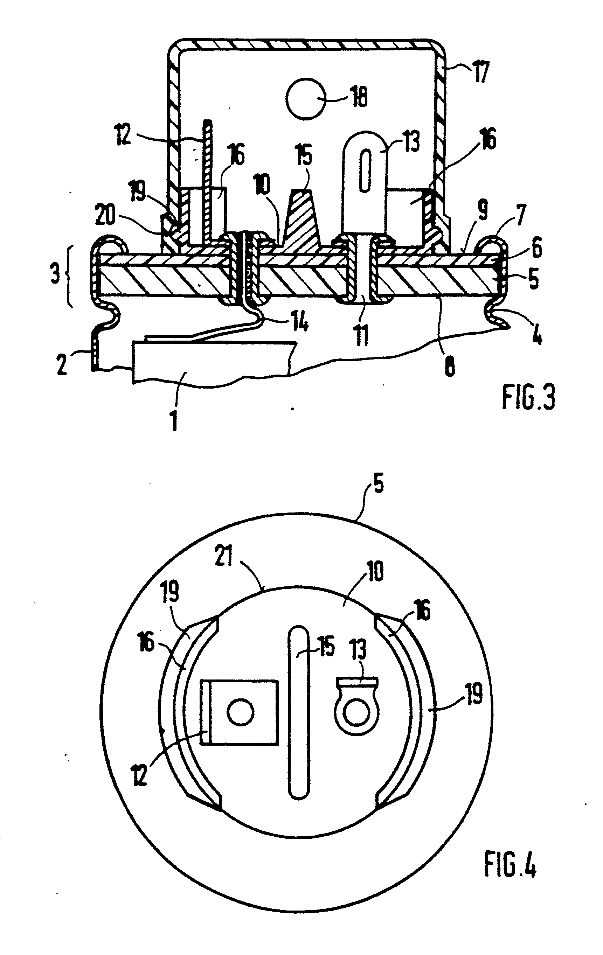

Auf den Kragen bzw. die Kragenabschnitte 16 kann gemäß Fig. 3 eine Isolierstoffkappe 17 aufgesteckt sein, die eine Aussparung 18, z. B. in Form einer Durchbrechung, aufweist. Durch diese sind an die Anschlußelemente 12, 13 z. B. angelötete, nicht dargestellte Zuleitungen hindurchführbar.

Die Isolierstoffkappe 17 kann im Preßsitz aufgesteckt und/oder aufgeklebt sein. Vorteilhaft sind beide miteinander verrastbar. Hierzu ist z. B. außen an den Kragenabschnitten 16 oder an einem umlaufenden Kragen ein oder mehrere Rastvorsprünge 19 in Form eines Wulstes oder in Form von kugelkalottenförmigen Erhöhungen etc. vorgesehen und in der Isolierstoffkappe 17 sind Rastausnehmungen 20 oder eine umlaufende Nut oder Hohlkehle vorgesehen.

Das Isolierstoffteil 10 ist vorzugsweise als Scheibe oder Platte ausgebildet, in deren Mittenbereich der Steg 15 oder mehrere Stege und an deren Rand 21 der Kragen oder die Kragenabschnitte 16 senkrecht zur Ebene der Scheibe oder Platte abstehend vorgesehen sind. Von besonderem Vorteil ist, daß ein Isolierstoffteil 10 gleicher Größe für verschieden große Isolierstoffplatten 5 verwendet werden kann. Dadurch sind die Werkzeugkosten für verschiedene Größen geringer als bei Herstellung je eines eigenen Abdeck- und Anschlußbauteils je Kondensatortyp.

**Ansprüche**

1. Elektrischer Kondensator mit in einem Gehäuse vorgesehenen Kondensatorkörper und einem Abschluß des Gehäuses durch eine Isolierstoffplatte, die durch Umbördeln oder Schnappwirkung oder Kerbwirkung des Randes des Gehäuses befestigt ist und auf deren Außenseite ein Isolierstoffteil mit wenigstens einem zwischen zwei benachbarten Anschlußelementen verlaufenden Steg vorgesehen ist, wobei die Anschlußelemente und das Isolierstoffteil mittels durch die Isolierstoffplatte hindurchgehender Nieten auf der Isolierstoffplatte befestigt sind, **dadurch gekennzeichnet,** daß das Isolierstoffteil (10) zwischen den Anschlußelementen (12,1 3) und dem Rand (7) des Gehäuses (2) einen umlaufenden Kragen oder Kragenabschnitte (16) aufweist.

2. Kondensator nach Anspruch 1, dadurch gekennzeichnet, daß auf den Kragen bzw. die Kragenabschnitte (16) eine Isolierstoffkappe (17) mit zumindest einer Aussparung (18) für die Zuleitung(en) aufgesteckt ist.

3. Kondensator nach Anspruch 1, dadurch gekennzeichnet, daß die Isolierstoffkappe (17) mit dem Kragen bzw. den Kragenabschnitten (16) verrastet ist.

4. Kondensator nach Anspruch 3, dadurch gekennzeichnet, daß am Kragen bzw. an den Kragenabschnitten 816) nach außen ragende Rastvorsprünge (19) und in der Isolierstoffkappe (17) entsprechende Rastausnehmungen (20) vorgesehen sind.

5. Kondensator nach Anspruch 2, dadurch gekennzeichnet, daß die Isolierstoffkappe (17) mit Preßsitz aufgesteckt ist.

6. Kondensator nach Anspruch 2, dadurch gekennzeichnet, daß das Isolierstoffteil (10) als Scheibe oder Platte ausgebildet ist, in deren Mittenbereich der oder die Stege (15) und an deren Rand (21) der Kragen bzw. die Kragenabschnitte (16) senkrecht zur Ebene der Scheibe bzw. Platte abstehend vorgesehen sind.

7. Kondensator nach einem der Ansprüche 1 bis 6, dadurch gekennzeichnet, daß das Gehäuse (2) aus Metall besteht.

8. Kondensator nach Anspruch 7, dadurch gekennzeichnet, daß das Gehäuse (2) aus Aluminium besteht.

9. Kondensator nach einem der Ansprüche 1 bis 8, dadurch gekennzeichnet, daß auf wenigstens einer Seite der Isolierstoffplatte (5) eine elastische Dichtungsschicht (6) vorgesehen ist.

FIG.1

FIG.2

EP 0 401 733 A2

FIG.3

FIG.4